# EUROPÄISCHE PATENTSCHRIFT

(11) **EP 0 611 624 B1**
(45) Veröffentlichungstag und Bekanntmachung des Hinweises auf die Patenterteilung: **09.07.1997**
(21) Anmeldenummer: 94101569.5
(22) Anmeldetag: 02.02.1994
(51) Int. Cl.: B23C 5/28, B23Q 11/10, A61C 3/02

(54) **Für hochtourigen Antrieb geeignetes, in Rotation versetzbares Werkzeug**
Rotary tool for high speed drive
Outil rotatif pour entraînement à haute vitesse

(30) Priorität: 15.02.1993 DE 4304515
(43) Veröffentlichungstag der Anmeldung: 24.08.1994
(73) Patentinhaber: SIEMENS AKTIENGESELLSCHAFT, 80333 München (DE)
(72) Erfinder: Landgraf, Hermann, D-64653 Lorsch (DE)

(56) Entgegenhaltungen:
- EP-A- 0 455 452
- WO-A-89/08534
- DE-B- 1 294 592

## Beschreibung

Die Erfindung betrifft ein für einen hochtourigen Antrieb geeignetes und in einem Drehzahlbereich bis 300.000 Upm betreibbares zahnärztliches Fräswerkzeug, welches einteilig ausgebildet ist und am einen Ende einen Schaft zur Halterung in einer geeigneten Spannvorrichtung des Antriebs und am anderen Ende einen Werkzeugkopf mit einer im wesentlichen radial am Umfang angeordneten aktiven Arbeitsfläche enthält, und welchem von außen ein auf die aktive Arbeitsfläche des Werkzeuges gerichteter Kühlmittelstrahl zuführbar ist. Ein solches Fräwerkzeug ist beispielsweise in der EP-A-455 452 beschrieben.

Werkzeuge, denen eine relativ große spanabhebende Leistung abverlangt wird oder die mit sehr hohen Drehzahlen betrieben werden, müssen ausreichend gekühlt werden. Hierzu ist es üblich, ein geeignetes Kühlmedium, in der Regel Wasser oder sogenanntes "Bohrwasser", auf das Werkzeug zu leiten und so die zu bearbeitenden Flächen und auch die Arbeitsflächen des Werkzeuges zu kühlen.

Aus DD-267 692 ist es bekannt, die Schneiden von rotierenden spanabhebenden Werkzeugen, welche einen vergleichsweise großen Durchmesser haben, wie Messerköpfe von Fräsern, zu kühlen, indem das Kühlmittel von der Rückseite des Werkzeuges her gezielt in einen Ringraum eingespritzt wird. Im Ringraum befinden sich radial sich erstreckende Stege, die in Drehrichtung des Werkzeuges gesehen jeweils hinter der Eingangsmündung des Zuführkanals in den Ringraum ragen. Der Weitertransport des Kühlmittels erfolgt vom Ringraum aus über mehrere Kanäle, die vom Schaft schräg nach außen zu den peripher gelegenen Schneiden verlaufen. Die Zufuhrstelle hat also einen kleineren Durchmesser als die Austrittsstelle an den Schneiden.

Durch Querschnittsverengungen und unterstützt auch durch die Fliehkraft bei Rotation des Werkzeuges entsteht ein erhöhter Druck, der das Kühlmittel nach außen treibt. Diese Art der Kühlmittelführung ist relativ aufwendig, nur für Werkzeuge größeren Durchmessers und konstruktionsbedingt nur für eine Drehrichtung geeignet.

Bei Kühlkanalbohrern ist es ferner bekannt ("Technica 20/1980, Seite 1762"), die Hauptschneiden eines Bohrers kontinuierlich zu kühlen, indem vom Werkzeugschaft aus Kühlflüssigkeit unter Druck in den Schneidbereich geleitet wird. Die Zufuhr der Kühlflüssigkeit erfolgt entweder über einen am Schaftende angeordneten Zuführring, der die Kühlflüssigkeit in die inneren Kühlkanäle des Bohrers und damit direkt in den Schneidbereich leitet, oder, indem der Schaft mit einem zentrischen Zufuhrkanal und davon abgehenden seitlichen Kanälen versehen ist, über die die Kühlflüssigkeit in den Schneidbereich geleitet wird. Auch hier wird das Kühlmittel über innen liegende Kanäle zugeführt.

In der WO 89/08534 ist eine für den Einsatz in Werkzeugmaschinen bestimmte Vorrichtung beschrieben, mit der den Schneidkanten oder Führungsleisten eines sich drehenden Bearbeitungswerkzeuges Kühl-, Schmier- oder Schneidflüssigkeit zugeführt werden kann. Das Bearbeitungswerkzeug ist mit einem inneren Flüssigkeitsraum versehen, von dem radiale Kanäle zu Austrittsöffnungen in unmittelbarer Nähe der Schneidkanten oder Schneidelemente führen. Das Bearbeitungswerkzeug ist ferner mit einer axialen Eintrittsöffnung für einen Flüssigkeitsstrahl versehen, der von der der Werkzeugspindel, in der das Bearbeitungswerkzeug gehaltert ist, gegenüberliegenden Seite auf das Werkzeug gerichtet ist. Der Flüssigkeitsstrahl wird durch ein Strahlrohr erzeugt, das in üblicher Weise über eine Flüssigkeitsleitung mit Flüssigkeit versorgt wird.

Aus der DE-Cl-500 485 ist eine Vorrichtung zur Zufuhr von Kühlwasser bei Schleifscheiben bekannt; bei dieser Vorrichtung wird das Kühlwasser von der Schleifscheibennabe aus durch die Poren der Schleifscheibe hindurch zur Schleifstelle geleitet. Zweck dieser Anordnung ist, einerseits eine genaue Zentrierung der Schleifscheibe zu erzielen und andererseits Verunreinigungen, die durch Eindringen von Fremdkörpern entstehen, zu beseitigen. Die Vorrichtung enthält hierzu ein trichterförmiges Ansaugteil, welches die Schleifspindelnabe umgibt. Über dieses Ansaugteil wird bei rotierender Schleifscheibe das Kühlwasser angesaugt und dieses sodann infolge der Zentrifugalkraft radial aus dem Ansaugtrichter in beidseitig der Schleifscheibe angeordnete Hohlräume gedrückt.

Im Dentalbereich, wo Werkzeuge der eingangs genannten Gattung, also mit externer Zufuhr des Kühlmittels, insbesondere zur Präparation der Zähne oder des Kieferknochens eines Patienten verwendet werden, wird zur Kühlung des Werkzeuges und auch der Präparationsstelle in der Regel ein Wasser-Luft-Gemisch zugeführt, welches infolge der Verwirbelung durch das Werkzeug um die Werkzeugspitze einen feinen Nebel bildet.

Bei zahnärztlichen Werkzeugen herkömmlicher Bauart ist, insbesondere bei stärkerer Belastung des Werkzeuges, keine ausreichende Kühlung gewährleistet, wodurch es zu einem vorzeitigen Verschleiß des Werkzeuges und/oder zu einer unzulässigen Überhitzung des zu bearbeitenden Materials kommen kann.

Der im Anspruch 1 angegebenen Erfindung liegt die Aufgabe zugrunde, demgegenüber Abhilfe zu schaffen und eine Möglichkeit einer verbesserten Kühlung des Werkzeuges anzugeben.

Die Erfindung fußt auf der Erkenntnis, daß sich bei hoher Drehzahl, also bei hoher Rotation des Werkzeuges, im Arbeitsbereich ein Druck- und Sogbereich bildet, der eine Pumpwirkung bewirkt. Bei hoher Drehzahl wird eine Luftströmung erzeugt, die das zugeführte Kühlmittel im zentral gelegenen Einströmkanal des Werkzeuges ansaugt und über die radial oder schräg nach außen verlaufenden Abströmkanäle wieder abströmen läßt. Dadurch ergibt sich eine sehr gute Kühlung des Werkzeuges von innen. Des weiteren werden die Arbeitsflächen (Schneiden) des Werkzeuges durch das an den Abströmkanälen im Bereich der Arbeitsflächen austretende Kühlmittel gekühlt. Die Kühlwirkung ist dabei umso effektiver, je höher die Drehzahl des Werkzeuges ist.

Nachfolgend werden mehrere Ausführungsbeispiele der Erfindung beschrieben.

Es zeigen:
Figur 1 eine erste Ausführungsform eines Werkzeuges nach der Erfindung,
Figur 2 eine zweite Ausführungsform,
Figur 3 einen Querschnitt entlang der Linie III-III in Figur 2,
Figur 4 eine dritte Ausführungsform im Längsschnitt entlang der Linie IV-IV in Figur 5,
Figur 5 die in Figur 4 gezeigte Ausführungsform im Querschnitt,
Figuren 6 und 7 weitere Ausführungsformen eines Werkzeuges nach der Erfindung im Querschnitt.

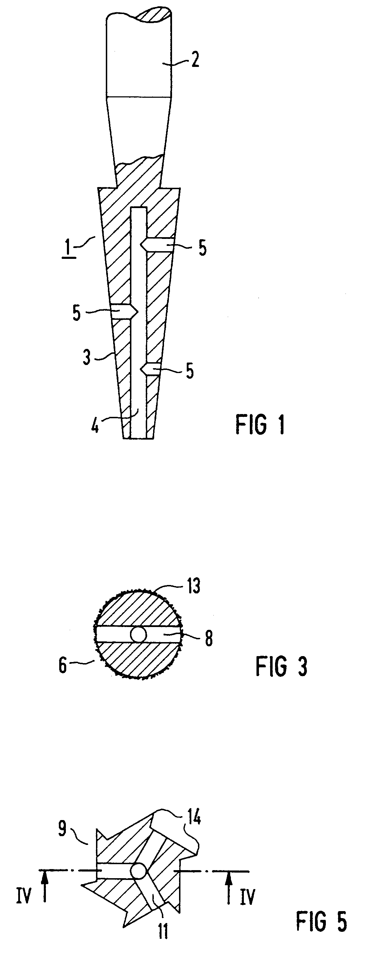

Die Figur 1 zeigt teilweise im Längsschnitt eine erste Ausführungsform eines insbesondere für den Einsatz bei zahnärztlichen Instrumenten geeigneten Werkzeuges 1, welches einen zylindrischen Schaft 2 aufweist, der in bekannter Weise in einer geeigneten Spannvorrichtung des Antriebs einsetzbar ist. Das Werkzeug 1 weist dem Schaft 2 gegenüberliegend einen konischen Werkzeugkopf 3 auf, der einen zentralen, als Sackloch ausgebildeten Einströmkanal 4 und mehrere, radial nach außen führende, mit dem Einströmkanal verbundene Abströmkanäle 5 aufweist. Die Abströmkanäle 5 liegen, wie aus der Darstellung ersichtlich, in mehreren, quer zur Werkzeuglängsachse verlaufenden Ebenen und sind am Umfang so angeordnet, daß sich bei Rotation keine Unwucht ergibt. Vorteilhafterweise sind in jeder Ebene am Umfang 3 Abströmkanäle vorgesehen.

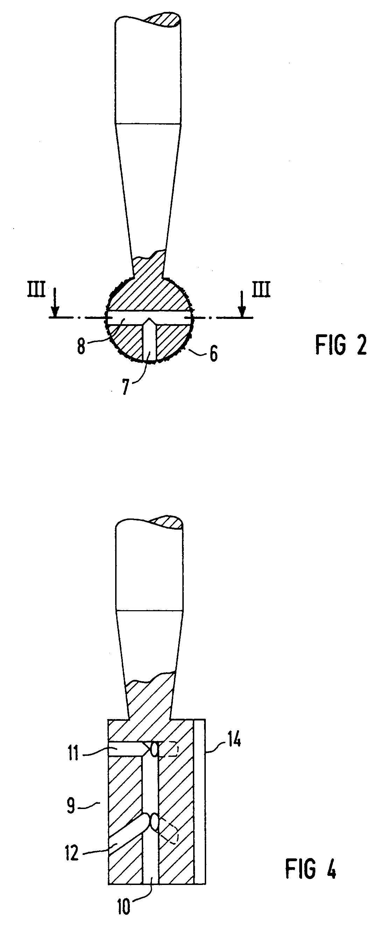

Die Figur 2 zeigt eine zweite Ausführungsform eines Werkzeuges mit einem kugelförmigen Werkzeugkopf 6, der wiederum einen zentralen Einströmkanal 7 aufweist, der mit einem etwa mittig gelegenen und quer verlaufenden Durchgangsabströmkanal 8 verbunden ist.

Die Figur 4 zeigt eine dritte Ausführungsform eines Werkzeuges mit einem zylindrischen Werkzeugkopf 9, der ebenfalls einen zentral gelegenen Einströmkanal 10 aufweist. Dieser ist einerseits mit drei im oberen Teil des Werkzeugkopfes angeordneten Abströmkanälen 11 und andererseits mit drei unter einem beliebigen Winkel zur Werkzeugachse verlaufenden (im vorliegenden Ausführungsbeispiel schräg nach unten gerichteten) Abströmkanälen 12 verbunden. Die Abströmkanäle 11 und 12 sind dabei so angeordnet, daß sich bei Rotation keine Unwucht ergibt.

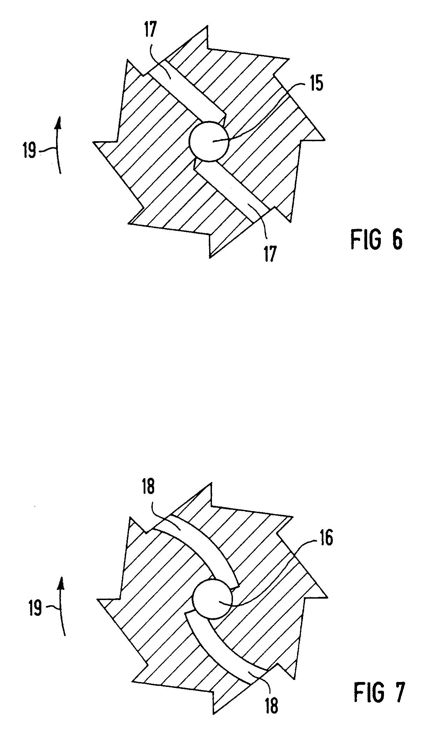

Die Figuren 6 und 7 zeigen in einer Querschnittsoarstellung weitere vorteilhafte Ausführungen eines erfindungsgemäßen Werkzeuges, welches mit Schneiden, wie in Figuren 4 und 5 gezeigt, versehen ist. Kennzeichnende Merkmale dieser Ausführungsformen sind, daß von den wiederum zentrisch angeordneten Einströmkanälen 15 und 16 die Abströmkanäle 17 und 18 nicht mittig, sondern tangential abgehen, wobei im Falle der Ausführung nach Figur 7 die Abströmkanäle gekrümmt ausgebildet sind. Die Krümmung ist dabei entgegengesetzt der Drehrichtung des Werkzeuges (Pfeile 19) angeordnet. Damit wird gegenüber der Version nach Figur 6 ein noch besseres Abströmen des Kühlmittels und damit eine effizientere Spülwirkung erzielt.

Die Ausführungsbeispiele stellen nur eine Auswahl von Möglichkeiten dar, den Werkzeugkopf mit einer effektiven Innenkühlung in Verbindung mit einer Kühlung der äußeren Arbeitsflächen aufzuzeigen, wobei die Vorteile sowohl bei Werkzeugen, die diamantbeschichtete Arbeitsflächen aufweisen, wie sie in Figur 3 mit Position 13 angedeutet sind, als auch bei Werkzeugen, die mit Schneiden versehen sind (Position 14 in Figuren 4 und 5 sowie Figuren 6 und 7), gegeben sind.

Obgleich die dargelegten Vorteile besonders bei Anwendung im Dentalbereich, also bei Werkzeugen, die für zahnärztliche Bohrantriebe eingesetzt werden, gegeben sind, ist die Anwendung nicht auf dieses Einsatzgebiet beschränkt; die Anwendung ist auch für Werkzeuge, die in anderen Bereichen eingesetzt werden, von Vorteil. So z.B. kann die erfindungsgemäße Kühlung auch bei Werkzeugen eingesetzt werden, die im Werkzeugmaschinenbau, z.B. bei Hochfrequenzspindeln, eingesetzt werden.

## Patentansprüche

1. Für einen hochtourigen Antrieb geeignetes und in einem Drehzahlbereich bis 300 000 Upm betreibbares zahnärztliches Fräswerkzeug, welches einteilig ausgebildet ist und am einen Ende einen Schaft (2) zur Halterung in einer geeigneten Spannvorrichtung des Antriebs und am anderen Ende einen Werkzeugkopf (3, 6, 9) mit einer im wesentlichen radial am Umfang angeordneten aktiven Arbeitsfläche (13, 14) enthält, und welchem von außen ein auf die aktive Arbeitsfläche des Werkzeuges gerichteter Kühlmittelstrahl zuführbar ist,
**dadurch gekennzeichnet,** daß der Werkzeugkopf (3, 6, 9) mit einem zentralen, als Sackloch ausgebildeten Einströmkanal (4, 7, 10, 15, 16) versehen ist, von dem aus das Kühlmittel selbsttätig aufgrund einer durch Rotation des Werkzeuges im Einströmkanal erzeugten Sogwirkung angesaugt wird, und daß von dem Sackloch aus mehrere an den Arbeitsflächen (13, 14) des Werkzeugkopfes ausmündende Abströmkanäle (5, 8, 11, 12, 17, 18) ausgehen, über die das Kühlmittel abströmt.

2. Werkzeug nach Anspruch 1,
**dadurch gekennzeichnet,**
daß am Umfang des Werkzeugkopfes (3, 9) mehrere, quer zur Schaftlängsachse verlaufende Abströmkanäle (5, 8, 11, 12, 17, 18) vorgesehen sind.

3. Werkzeug nach Anspruch 2,
**dadurch gekennzeichnet,**
daß die Abströmkanäle (5) auf mehreren, quer zur Schaftlängsachse verlaufenden Ebenen verteilt angeordnet sind.

4. Werkzeug nach einem der Ansprüche 1 bis 3,
**dadurch gekennzeichnet,**
daß zumindest ein Teil der Abströmkanäle (12) in einem von 90° abweichenden Winkel zur Werkzeugachse angeordnet sind.

5. Werkzeug nach einem der Ansprüche 1 bis 3,
**dadurch gekennzeichnet,**
daß die Abströmkanäle (17, 18) tangential vom Einströmkanal (15, 16) abgehen.

6. Werkzeug nach Anspruch 5,
**dadurch gekennzeichnet,**
daß die Abströmkanäle (17, 18) entgegengesetzt der Drehrichtung des Werkzeuges gekrümmt angeordnet sind.

7. Werkzeug nach einem der Ansprüche 1 bis 4,
**dadurch gekennzeichnet,**
daß die Abströmkanäle (8) als den Werkzeugkopf (6, 9) durchquerende Kanäle ausgebildet sind.

8. Werkzeug nach einem der Ansprüche 1 bis 7,
**dadurch gekennzeichnet,**
daß die Austrittskanäle (5, 8, 11, 12) durch Bohrungen gebildet sind.

## Claims

1. Dental milling tool suitable for a high-speed drive and capable of operating in a speed range of up to 300,000 r.p.m., which milling tool is constructed in one piece and comprises at one end a shaft (2) for mounting in a suitable chucking device of the drive and at the other end a tool head (3, 6, 9) with an active working surface (13, 14) arranged substantially radially on the periphery, and which milling tool can be supplied from the outside with a stream of cooling medium directed at the active working surface of the tool, **characterised in that** the tool head (3, 6, 9) is provided with a central in-flow duct (4, 7, 10, 15, 16) formed as a blind hole from which the cooling medium is sucked automatically owing to a suction effect created in the in-flow duct by rotation of the tool, and in that, from the blind hole, there originate several out-flow ducts (5, 8, 11, 12, 17, 18) which open out on the working surfaces (13, 14) of the tool head and by way of which the cooling medium flows out.

2. Tool according to claim 1, **characterised in that** several out-flow ducts (5, 8, 11, 12, 17, 18) extending transversely relative to the longitudinal axis of the shaft, are provided on the periphery of the tool head (3, 9).

3. Tool according to claim 2, **characterised in that** the out-flow ducts (5) are arranged distributed on several planes extending transversely relative to the longitudinal axis of the shaft.

4. Tool according to one of claims 1 to 3, **characterised in that** at least some of the out-flow ducts (12) are arranged at an angle relative to the tool axis that deviates from 90°.

5. Tool according to one of claims 1 to 3, **characterised in that** the out-flow ducts (17, 18) leave the in-flow duct (15, 16) tangentially.

6. Tool according to claim 5, **characterised in that** the out-flow ducts (17, 18) are arranged with a curvature in the opposite direction to the rotational sense of the tool.

7. Tool according to one of claims 1 to 4, **characterised in that** the out-flow ducts (8) are formed as ducts that traverse the tool head (6, 9).

8. Tool according to one of claims 1 to 7, **characterised in that** the out-flow ducts (5, 8, 11, 12) are formed by bore holes.

## Revendications

1. Outil de fraisage dentaire qui convient à un dispositif d'entraînement à grande vitesse de rotation, que l'on peut faire fonctionner dans un domaine de vitesse de rotation pouvant aller jusqu'à 300.000 tours/min, qui est réalisé d'un seul tenant, qui comporte à une extrémité une tige (2) servant à le fixer à un dispositif de serrage adéquat du dispositif d'entraînement et, à l'autre extrémité, une tête (3, 6, 9) d'outil comportant une surface (13, 14) active d'usinage ménagée sensiblement radialement sur le pourtour et auquel on peut envoyer de l'extérieur un jet d'agent de refroidissement dirigé sur la surface active d'usinage de l'outil , caractérisé en ce que la tête (3, 6, 9) d'outil est munie d'un canal (4, 7 10, 15, 16) d'entrée central, qui est réalisé en trou borgne et duquel l'agent de refroidissement est automatiquement aspiré en raison d'un effet de remous produit dans le canal d'entrée par la rotation de l'outil, et en ce qu'il part du trou borgne plusieurs canaux (5, 8, 11, 12, 17, 18) qui débouchent sur les surfaces (13) 14 d'usinage de la tête d'outil et par l'intermédiaire desquels l'agent de refroidissement s'écoule.

2. Outil suivant la revendication 1, caractérisé en ce qu'il est prévu sur le pourtour de la tête (3, 9) d'outil plusieurs canaux (5, 8, 11, 12, 17, 18) d'évacuation s'étendant transversalement à l'axe longitudinal de la tige.

3. Outil suivant la revendication 2, caractérisé en ce que les canaux (5) d'évacuation sont ménagés en étant répartis sur plusieurs plans s'étendant transversalement à l'axe longitudinal de la tige.

4. Outil suivant l'une des revendications 1 à 3, caractérisé en ce qu'au moins une partie des canaux (12) d'évacuation est ménagé en faisant un angle différent de 90° avec l'axe de l'outil.

5. Outil suivant l'une des revendications 1 à 3, caractérisé en ce que les canaux (17, 18) d'évacuation partent de manière tangente du canal (15, 16) d'entrée.

6. Outil suivant la revendication 5, caractérisé en ce que les canaux (17, 18) d'évacuation sont incurvés en sens opposé au sens de rotation de l'outil.

7. Outil suivant l'une des revendications 1 à 4, caractérisé en ce que les canaux (8) d'évacuation sont réalisés en canaux traversant la tête (6, 9) de l'outil.

8. Outil suivant l'une des revendications 1 à 7, caractérisé en ce que les canaux (5, 8, 11, 12) d'évacuation sont formés par des perçages.
